# EUROPÄISCHE PATENTSCHRIFT

(11) **EP 3 233 950 B1**
(45) Veröffentlichungstag und Bekanntmachung des Hinweises auf die Patenterteilung: **31.10.2018**
(21) Anmeldenummer: 15794939.7
(22) Anmeldetag: 17.11.2015
(51) Int. Cl.: C08G 18/48, C08G 18/66, C08G 18/72, C08G 18/76, C08G 18/79, C08G 18/24, C08G 18/32, C08G 18/36, C08K 7/14, C09J 175/04

(54) **ZWEI-KOMPONENTEN-POLYURETHAN-KLEBSTOFF ZUM VERKLEBEN VON FASERFORMTEILEN**
TWO-COMPONENT POLYURETHANE ADHESIVE FOR THE ADHESIVE BONDING OF MOLDED FIBER PARTS
ADHÉSIF BICOMPOSANT À BASE DE POLYURÉTHANE POUR LE COLLAGE DE PIÈCES MOULÉES FIBREUSES

(30) Priorität: 17.12.2014 DE 102014226277
(43) Veröffentlichungstag der Anmeldung: 25.10.2017
(73) Patentinhaber: Henkel AG & Co. KGaA, 40589 Düsseldorf (DE)
(72) Erfinder: THIELE, Lothar, 40764 Langenfeld (DE); PÖLITZ, Silvana, 40699 Erkrath (DE); JURKSCHAT, Klaus, 44379 Dortmund (DE); ZÖLLER, Thomas, 45276 Essen (DE)
(86) Internationale Anmeldenummer: PCT/EP2015/076753
(87) Internationale Veröffentlichungsnummer: WO 2016/096277

(56) Entgegenhaltungen:
- WO-A1-2014/076206

## Beschreibung

Die Erfindung betrifft einen Zwei-Komponenten-Polyurethan-Klebstoff (2K-PU-Klebstoff), der eine hohe Haftfestigkeit sowie eine hohe Glasübergangstemperatur aufweist. Weiterhin soll dieser Klebstoff auch bei hohen Umgebungstemperaturen eine ausreichend lange Verarbeitungszeit haben und auch Substrate mit unebenen Oberflächen verkleben können sowie Spalten oder Zwischenräume festklebend überbrücken.

Zwei-Komponenten-Polyurethan-Klebstoffe auf Basis von Polyolen und Polyisocyanaten sind bereits seit langem bekannt. 2K-PU-Klebstoffe können vorteilhafterweise nach dem Mischen der Komponenten auch bei Raumtemperatur ("Kalthärtung") aushärten und können deshalb bereits nach kurzer Aushärtezeit schnell höhere Kräfte aufnehmen. Für den Einsatz als strukturelle Klebstoffe werden jedoch hohe Ansprüche in Bezug auf Festigkeiten und Klebkräfte an solche Klebstoffe gestellt, da derartige Klebstoffe Elemente von tragenden Strukturen darstellen. Hohe Festigkeiten werden üblicherweise durch hohe Vernetzungsdichten erzielt. Dies wird sehr häufig durch die Erhöhung der Konzentration an funktionellen Gruppen und den Einsatz von höherfunktionellen Polyolen oder Polyaminen und höherfunktionellen Polyisocyanaten erreicht, was bei zu hoher Vernetzungsdichte zu einer Versprödung der Klebefuge führen kann.

WO 2002/066572 A1 beschreibt 2K-PU-Klebstoffe für Holzwerkstoffe, die 10 bis 98 Gew.% mindestens eines oleochemischen Polyols, 1 bis 7,5 Gew.% mindestens eines Diols mit einer Hydroxyzahl zwischen 400 bis 2000, sowie 1 bis 7,5 Gew.% eines drei-, vier- oder fünffunktionellen Polyols mit einer Hydroxylzahl von 200 bis 2000 sowie weitere Hilfsstoffe und ein Harz enthalten, wobei der Klebstoff über Polyisocyanate vernetzbar ist.

WO 2009/080740 A1 offenbart einen 2K-PU-Klebstoff, bestehend aus einer Polyolkomponente, enthaltend 2 bis 30 Gew.% mindestens eines Polyesterdiols mit einem Molekulargewicht von mehr als 1000 g/mol, 5 bis 35 Gew.% mindestens eines 3 bis 14 funktionellen Polyols, 5 bis 35 Gew.% hydrophobe Polyole, 2 bis 65 Gew.% weitere Additive oder Hilfsstoffe, wobei deren Summe 100 Gew.% ergeben soll, sowie eine vernetzende Komponente aus Polyisocyanaten in einem NCO/OH-Verhältnis von 0,9:1 bis 1,5:1, wobei der vernetzte Klebstoff eine Glasübergangstemperatur (Tg) größer 50°C aufweist.

EP 2468789 A1 beschreibt 2K-PU-Zusammensetzungen, umfassend Rizinusöl, mindestens ein alkoxyliertes aromatisches Diol, mindestens ein Polyol mit 5 bis 8 Hydroxylgruppen sowie mindestens ein Polyisocyanat. Es wird angegeben, dass diese Zusammensetzungen über eine lange "Offenzeit" (offene Zeit) verfügen sollen und auch nach längerer Exposition gegenüber einem Klima mit hoher Luftfeuchtigkeit (z.B. 70% relative Luftfeuchtigkeit) auch noch nach 40 Minuten, insbesondere auch noch nach 60 Minuten verklebt und zu Polymeren mit hoher mechanischer Festigkeit ausgehärtet werden können und so eine strukturelle Verklebung hergestellt werden kann. Diese 2K-PU-Zusammensetzungen eignen sich zur Verwendung als strukturelle Klebstoffe, insbesondere für das Verkleben von Flügelhalbschalen von Rotorblättern für Windkraftanlagen.

Flügelhalbschalen von Rotorblättern für Windkraftanlagen sind in der Regel aus glasfaserverstärkten Kunststoffsubstraten und ggf. metallischen Strukturelementen aufgebaut. Diese Bauteile müssen eine hohe mechanische Stabilität aufweisen. Daher ist es wünschenswert, dass die entsprechenden Klebstoffe ebenfalls entsprechende Kräfte aufnehmen können. Neben der vorgenannten Verklebung von faserverstärkten Bauteilen zur Herstellung von Flügeln für Windkraftanlagen gibt es eine Vielzahl weiterer Anwendungsbereiche mit ähnlichen Anforderungen an die Verklebungen von Bauteilen. Beispiele dafür sind Verklebungen von faserverstärkten Bauteilen für Flügel oder andere Anbauteile von Flugzeugen oder die Verklebung von faserverstärkten Bauteilen im Boots- und Schiffsbau. Die mechanischen Anforderungen an die verklebten Bauteile sind hoch. Es müssen hohe Zugkräfte aufgenommen werden. Weiterhin müssen die verklebten Bauteile einer Belastung durch permanente Schwingungen, die zu Materialermüdung führen können, standhalten. Weiterhin sind die Umwelteinflüsse groß, es muss eine hohe Stabilität auch bei hohen Temperaturschwankungen sichergestellt werden, sowie konstante Eigenschaften bei unterschiedlicher Feuchtigkeit. Es ist bekannt, solche Bauteile alternativ mit Zwei-Komponenten-Epoxid-Klebstoffen zu verkleben. Diese zeigen eine ausreichende Festigkeit, haben aber verschiedene Nachteile in der Verarbeitung. So sind hohe Aushärtetemperaturen notwendig, um eine ausreichende Festigkeit zu erhalten. Weiterhin müssen die Substratoberflächen für die Verklebung besonders vorbereitet werden.

Es besteht insbesondere Bedarf an Klebstoffen, die eine lange offene Zeit aufweisen und somit zum Verkleben von große Flächen besonders gut geeignet sind und die zudem im ausgehärteten Zustand unter unterschiedlichen Witterungs- und Temperaturbedingungen eine ausreichende mechanische Stabilität zeigen.

### Ergänzungsseite 2a

WO 2014/076206 offenbart ein 2-Komponenten-Polyurethanklebstoff bestehend aus einer Polyolkomponente enthaltend a) 2 bis 30 Gew.-% mindestens eines oleochemischen Polyols mit einem Molekulargewicht größer/gleich 500g/mol, b) 5 bis 35 Gew.-% mindestens eines 3 bis 14 funktionellen Polyols, c) 5 bis 35 Gew.-% mindestens eines Polyols auf der Basis von ethoxylierten oder propoxylierten Polyphenolen, d) 0 bis 20 Gew.-% mindestens eines weiteren Polyols, e) 2 bis 65 Gew.-% mindestens eines weiteren Additivs, wobei die Summe aus a) bis e) 100 Gew.-% ergeben soll, sowie einer Isocyanatkomponente enthaltend mindestens ein aromatisches und mindestens ein aliphatisches Polyisocyanat in einem NCO/OH-Verhältnis von 0,9:1 bis 1,5:1, wobei der vernetzte Klebstoff eine T_{g} größer oder gleich 65°C aufweist.

Aufgabe der vorliegenden Erfindung ist es daher, einen Klebstoff mit verbesserten Eigenschaften bereitzustellen. Der Klebstoff soll im ausgehärteten Zustand sehr gute physikalische und mechanische Eigenschaften zeigen. Die Aushärtungszeit soll verkürzt sein. Der Klebstoff soll aber eine ausreichend lange offene Zeit aufweisen, auch bei erhöhter Umgebungstemperatur und hoher Luftfeuchtigkeit, wie sie beispielsweise in subtropischen und tropischen Gebieten vorkommen, wo Temperaturen zwischen 15 und 50 °C und relative Luftfeuchtigkeiten (rF) zwischen 0 und 85 % vorgefunden werden. Auch unter diesen Bedingungen soll eine stabile Verklebung von unebenen Oberflächen sichergestellt werden können. Weiterhin sollen die vernetzten Klebstoffschichten gegenüber Feuchtigkeit und unterschiedlicher Umgebungstemperatur unempfindlich sein und in ihren mechanischen Eigenschaften stabil bleiben. Der ausgehärtete Klebstoff soll also auch in feuchten Klimata eine hohe Alterungsbeständigkeit aufweisen. Schließlich soll der Klebstoff eine hohe Glasübergangstemperatur nach der Aushärtung zeigen. Üblicherweise werden Polyurethane mit hoher Glasübergangstemperatur aus kurzkettigen aliphatischen Polyolen und aromatischen Polyisocyanaten hergestellt, diese haben jedoch kurze Topfzeiten.

Die Aufgabe wird gelöst durch einen 2-Komponenten-Polyurethanklebstoff umfassend
I) eine Polyolkomponente enthaltend mindestens einen Katalysator und
   (a) 2 bis 30 Gew.% mindestens eines oleochemischen Polyols mit einem zahlenmittleren Molekulargewicht (Mₙ) von mindestens 500 g/mol;
   (b) 5 bis 35 Gew.% mindestens eines von (a) verschiedenen Polyols mit 3 bis 14 Hydroxylgruppen;
   (c) 5 bis 35 Gew.% mindestens eines von (a) und (b) verschiedenen Polyols ausgewählt aus ethoxylierten und/oder propoxylierten Polyphenolen;
   (d) 1 bis 65 Gew.% Glasfasern oder eines Gemisches von unterschiedlichen Glasfasern;
   (e) 0 bis 65 Gew.% mindestens eines von (a) bis (d) verschiedenen Additivs oder Hilfsstoffs;
   wobei sich die Massenanteile der Komponenten (a) bis (e) auf das Gesamtgewicht der Polyolkomponente beziehen; sowie
II) eine Isocyanatkomponente enthaltend aromatische und/oder aliphatische Polyisocyanate in einem NCO/OH-Verhältnis von 0,9:1 bis 1,5:1;
wobei der vernetzte Zwei-Komponenten-Polyurethan-Klebstoff eine Glasübergangstemperatur (Tg) von mindestens 65°C aufweist.

Ein weiterer Gegenstand der Erfindung ist ein Verfahren zum Verkleben von zwei Substraten, vorzugsweise ausgewählt aus Metall-, Kunststoff- und Schaumstoffsubstraten, Faserverbundwerkstoffen und faserhaltigen Formkörpern, insbesondere bevorzugt ausgewählt aus Faserverbundwerkstoffen und faserhaltigen Formkörpern auf Basis von Glasfasern, Kohlefasern, Naturfasern oder synthetischen Fasern (aus synthetischen Polymeren), eingebettet in einer Kunstoffmatrix, bei dem zunächst der erfindungsgemäße Zwei-Komponenten-Polyurethan-Klebstoff auf die zu verklebende Fläche des ersten Substrats aufgebracht und anschließend das zweite Substrat mit seiner zu verklebenden Fläche auf das erste Substrat aufgelegt wird.

Bevorzugte Ausführungsformen finden sich in den abhängigen Ansprüchen.

Für die erfindungsgemäße Verklebung sind bekannte Formkörper aus hochfesten Faserverbundwerkstoffen geeignet. Diese können beispielsweise Metallfasern, Keramikfasern, Glasfasern, Kohlefasern, Naturfasern oder synthetischen Fasern (aus synthetischen Polymeren) und Kombinationen daraus enthalten. Insbesondere bevorzugt sind Glasfasern, Kohlefasern, Naturfasern oder synthetische Fasern. Entsprechende Beispiele für diese Kategorien finden sich in A.R. Bunsell, J. Renard "Fundamentals of Fibre Reinforced Composite Materials", CRC Press 2005, ISBN 0750306890.

Beispiele für geeignete synthetische Fasern sind Polyesterfasern, Polyethylenfasern, Polypropylenfasern, Polyiminfasern, Poly(meth)acrylatfasern, Polyamidfasern, wie Fasern aus Polyamid 6, Polyamid 6.6 oder Polyaramid (Poly(p-phenylenterephthalamid)). Keramikfasern umfassen oxidische und nicht-oxidische Keramikfasern, wie Aluminiumoxidfasern, Siliziumdioxidfasern, Basaltfasern, Kohlenstoffsilizidfasern. Beispiele von geeigneten Metallfasern sind Fasern aus Stahl, rostfreiem Stahl und Aluminium. Beispiele für geeignete natürliche Fasern sind Holzfasern, Sisalfasern, Flachsfasern, Hanffasern, Kokosfasern, Bananenfasern und Jutefasern.

Diese Fasern werden, vorzugsweise in Form von Matten, Geweben, Gelegen, Vliesen oder Rovings, in eine Kunststoffmatrix eingebracht. Die Kunststoffmatrix kann beispielsweise aus Polyestern, Polyepoxiden, Polyurethanen, Polyvinylestern, Hybridharzen auf Basis von Polyvinylestern, Polystyrol und Diphenylmethandiisocyanat oder Hybridharzen auf Basis von ungesättigten Polyestern, Polystyrol und Diphenylmethandiisocyanat bestehen, die zu einem duroplastischen Polymer reagieren. Solche faserverstärkten Substrate sind dem Fachmann bekannt. Sie werden beispielsweise im Flugzeugbau, im Bootsbau oder bei anderen mechanisch hoch belasteten Bauteilen eingesetzt. Ein besonderes Anwendungsgebiet solcher verklebten Substrate sind Flügel für Windkraftrotoren. Auch die Herstellverfahren für solche Formteile sind bekannt. Die vorgenannten Flügel werden beispielsweise in Hohlformen hergestellt und vernetzt. Dabei ist die Form häufig als halbseitige Form ausgeführt. Die der Form zugewandte Seite wird im Allgemeinen in einer glatten, einsatzbereit ausgeführten Oberfläche erhalten, die andere Seite kann und soll üblicherweise noch bearbeitet werden. Dabei werden in der weiteren Herstellung der Flügel zwei oder mehr dieser Substrate miteinander verklebt. Als zu verklebende Seite wird im Allgemeinen die der Form abgewandte Seite eingesetzt. Die Oberfläche soll so ausgebildet sein, dass die zu verklebenden Substratteile angenähert eine Passform aufweisen. Die zum Verkleben vorgesehene Oberfläche kann rau und in sich uneben sein. Ein Schleifen oder Fräsen auf eine exakte spiegelbildliche Form zu dem zu verklebenden Gegenstück ist erfindungsgemäß nicht notwendig. Überraschenderweise ist bei Verwendung des erfindungsgemäßen Klebstoffs keine Vorbehandlung der zu verklebenden Oberflächen notwendig. Eine im Wesentlichen fettfreie Oberfläche zum Auftragen des Klebstoffs ist aber vorteilhaft. Ein Einsatz von Primern ist nicht erforderlich.

Eine bekannte Arbeitsweise ist derart, dass die Oberflächen an der äußeren Seite der Formteile vor dem Herstellen der Teile in der Form zur Vernetzung mit einem reißfesten Schutzgewebe abgedeckt werden. Dieses kann unmittelbar vor der späteren Verklebung vollständig abgezogen werden und so eine geeignete Oberfläche ergeben. Es ist aber auch möglich, diese Oberflächen mechanisch grob zu bearbeiten und an das entsprechende Gegenstück anzupassen. Auf die so vorbereiteten und von losen Partikeln befreiten Oberflächen der Substrate kann dann der erfindungsgemäße Klebstoff aufgetragen werden.

Die Verklebung der Faserverbundwerkstoffe, insbesondere für Flügel für Windkraftrotoren, soll vorzugsweise eine Reihe von Anforderungen erfüllen. So soll der Klebstoff vorzugsweise bei 15 bis 50° C und 0 bis 85 % relativer Luftfeuchtigkeit (rF) appliziert werden können, stärker bevorzugt bei 20 bis 40°C und 20 bis 85 % rF. Die Aushärtung kann vorzugsweise bei 60 bis 90 °C, insbesondere bevorzugt bei 70 bis 80 °C erfolgen. Die Verklebung hat vorzugsweise eine Zugscherfestigkeit von mindestens 12 MPa. Weiterhin weist der Klebstoff im ausgehärteten Zustand vorzugsweise eine Zugfestigkeit von mindestens 40 MPa, vorzugsweise einen E-Modul (Elastizitätsmodul) von mindestens 2000 MPa, weiter bevorzugt von mindestens 2500 MPa, noch weiter bevorzugt von mindestens 3000 MPa, besonders bevorzugt von mindestens 3500 MPa, am stärksten bevorzugt von mindestens 4 000 MPa, und vorzugsweise eine Bruchdehnung von mindestens 1%, auch nach Feuchtigkeitslagerung auf. Die Warmformbeständigkeit soll vorzugsweise mindestens 65° C betragen. Dies bedeutet, dass der vernetzte, also ausgehärtete, Klebstoff eine Glasübergangstemperatur von mindestens 65° C haben muss.

Der erfindungsgemäße 2K-PU-Klebstoff, der die vorgenannten Anforderungen erfüllt, ist vorzugsweise pastös, er kann dabei aber insbesondere auch thixotrope Eigenschaften zeigen. Er umfasst eine Polyolkomponente und eine Isocyanatkomponente. Diese beiden Komponenten werden unmittelbar vor der Applikation gemischt. Die Polyolkomponente muss verschiedene Polyole enthalten. Damit soll zum einen eine ausreichende Vernetzung für eine mechanisch stabile Verklebung, auch bei thermischer Belastung sichergestellt werden. Zum anderen soll durch die Auswahl der unterschiedlichen Polyole eine ausreichende Hydrophobie erreicht werden, sodass bei einer Verarbeitung bei hoher Luftfeuchtigkeit die offene Zeit erhöht werden kann. Außerdem wird durch die Hydrophobie des Klebstoffs erreicht, dass die vernetzten Klebstoffschichten gegen Feuchtigkeit unempfindlicher sind und somit ihre mechanischen Eigenschaften auch unter feuchten klimatischen Bedingungen weitgehend stabil bleiben und eine hohe Alterungsbeständigkeit aufweisen.

Die Vorsilbe "Poly" in Substanzbezeichnungen wie "Polyol", "Polyisocyanat", "Polyether" oder "Polyepoxid" weist im vorliegenden Dokument darauf hin, dass die jeweilige Substanz formal mehr als eine der entsprechenden funktionellen Gruppe pro Molekül enthält.

Als "oleochemische Polyole" werden in dieser Erfindung Polyole auf Basis von Fetten und Ölen pflanzlicher oder tierischer Herkunft als auch die petrochemisch hergestellten Produktäquivalente verstanden. Vorzugsweise handelt es sich aber dabei um Polyole auf Basis von Fetten und Ölen pflanzlicher oder tierischer Herkunft. Es ist insbesondere bevorzugt, dass die Polyole Fette oder Öle pflanzlicher oder tierischer Herkunft sind. Dabei handelt es sich vorzugsweise um hydroxylgruppenhaltige Ester von Fettsäuren, vorzugsweise um Mono-, Di- oder Triglyceride. Bei den vorgenannten Fettsäuren handelt es sich um Carbonsäuren mit vorzugsweise 6 bis 40, weiter bevorzugt 8 bis 30, insbesondere bevorzugt 14 bis 26 Kohlenstoffatomen. Es kann sich um gesättigte als auch ungesättigte Fettsäuren handeln. Bei den oleochemischen Polyole kann es sich um natürliche hydroxylgruppenhaltige Fette und Öle handeln, wie beispielsweise Ricinusöl. Es kann sich aber auch um Polyole handeln, die aus natürlichen Fetten und Ölen hergestellt werden, wie z. B. die Reaktionsprodukte von epoxidierten Fettstoffen mit mono- oder polyfunktionellen Alkoholen oder Fettsäureglycerinestern, die zumindest teilweise mit Hydroxylgruppen substituiert sind. Eine weitere Gruppe der oleochemischen Polyole sind Ringöffnungs- und Umesterungsprodukte von epoxidierten Fettsäureestern niederer Alkohole, also von epoxidierten Fettsäuremethyl-, -ethyl-, -propyl- oder -butylestern. Beispielhaft erwähnt seien die Ringöffnungs- oder Umesterungsprodukte mit Alkoholen, die 2 bis 4 Hydroxylgruppen tragen, insbesondere die Umsetzungsprodukte mit Ethylenglykol, Propylenglykol, oligomeren Ethylenglykolen, oligomeren Propylenglykolen, Glycerin, Trimethylolpropan oder Pentaerythrit. Weiterhin können Derivate der Dimerfettsäure, wie Dimerfettsäurediole, eingesetzt werden. Handelsprodukte sind beispielsweise Sovermol® 320, 650, 750, 760, 805, 810, 815, 818, 819, 860, 908, 1005, 1014, 1055, 1058, 1083, 1092, 1095, 1102, 1111 oder 1140. Es können auch Mischungen von zwei oder mehreren der vorgenannten oleochemischen Polyole eingesetzt werden, vorzugsweise haben diese ein OH-Äquivalentgewicht von 150 bis 500 g/eq und eine OH-Funktionalität von 2,3 bis 4. Die oleochemischen Polyole sind in der Polyolkomponente des Klebstoffs zu 2 bis 30 Gew.%, vorzugsweise zu 10 bis 20 Gew.%, enthalten.

Als Polyole mit 3 bis 14 Hydroxylgruppen können beispielsweise Ethoxylierungs- und/oder Propoxylierungsprodukte von Trimethylolpropan, Glycerin, Polyglycerin, Pentaerythrit, Erythrit, Zuckeralkoholen oder hydrierten Zuckeralkoholen wie Xylit, Dulcit, Mannit, Sorbit oder Maltit, von Kohlenhydraten wie Saccharose, Dextrose, Invertzucker, Rhamnose, Lactose, Trehalose, Maltose, Cellobiose, Melibiose, Gentiobiose, Stärkeabbauprodukten wie hydrierten Stärkehydrolysaten oder deren Mischungen verwendet werden. Es werden vorzugsweise Ethoxylierungs- und/oder Propoxylierungsprodukte mit bis zu 15 Alkylenoxideinheiten eingesetzt. Die Herstellung derartiger Polyole wird beispielsweise in der WO 2012/134849 A1 beschrieben. Alternativ können auch die nicht alkoxylierten Zuckeralkohole eingesetzt werden. Die Polyole mit 3 bis 14 Hydroxylgruppen sind in der Polyolkomponente des Klebstoffs zu 5 bis 35 Gew.%, vorzugsweise zu 15 bis 30 Gew.% enthalten.

Polyole auf der Basis von ethoxylierten und/oder propoxylierten Polyphenolen sind zum Beispiel ethoxyliertes und/oder propoxyliertes Bisphenol A, Bisphenol B oder Bisphenol F. Vorzugsweise werden Propoxylierungsprodukte des Bisphenols A verwendet, die einen Propoxylierungsgrad von 2 bis 3, insbesondere bevorzugt von 2 aufweisen. Der Propoxylierungsgrad gibt an, wieviel Propylenoxideinheiten im Mittel mit einem Bisphenol umgesetzt werden. Beispielsweise ist bei einem Propoxylierungsgrad von 2 im Mittel jede phenolische Gruppe eines Bisphenolmoleküls nur mit einem Propylenoxid umgesetzt. Die ethoxylierten oder propoxylierten Polyphenole sind in der Polyolkomponente zu 5 bis 35 Gew.%, vorzugsweise zu 10 bis 20 Gew.% bezogen auf des Gesamtgewicht der Polyolkomponente enthalten.

Die Isocyanatkomponente enthält aromatische und/oder aliphatische Polyisocyanate. In einer bevorzugten Ausführungsform umfasst die Isocyanatkomponente sowohl aromatische also auch aliphatische Polyisocyanate.

Als aromatisches Polyisocyanat der Isocyanatkomponente kann beispielsweise 2,4'-Diphenylmethandiisocyanat, 4,4'-Diphenylmethandiisocyanat, eine Mischung aus 2,4'-Diphenylmethandiisocyanat und 4,4'-Diphenylmethandiisocyanat, ein polymeres Isocyanat auf der Basis von 2,4'-und 4,4'-Diphenylmethandiisocyanat mit einer NCO-Funktionalität von 2,0 bis 3,2 oder eine Mischung der vorgenannten Diphenylmethandiisocyanate eingesetzt werden. In einer bevorzugten Ausführungsform ist das mindestens eine aromatische Polyisocyanat in der Isocyanatkomponente des Klebstoffs zu 30 bis 80 Gew.%, insbesondere bevorzugt zu 35 bis 60 Gew.% enthalten.

Als aliphatisches Polyisocyanat der Isocyanatkomponente kann beispielsweise Tetramethoxybutan-1,4-diisocyanat, Butan-1,4-diisocyanat, Hexan-1,6-diisocyanat (HDI), 1,6-Diisocyanato-2,2,4-trimethylhexan, 1,6-Diisocyanato-2,4,4-trimethylhexan, 1,12-Dodecandiisocyanat (C₁₂DI), Isophorondiisocyanat (3-lsocyanatmethyl-3,5,5-trimethylcyclohexylisocyanat, IPDI) sowie deren Umsetzungsprodukte mit Glycerin, Trimethylolpropan oder deren Trimerisierungsprodukte verwendet werden. Bevorzugt eingesetzt wird trimerisiertes Hexamethylendiisocyanat (HDI), vorzugsweise mit einer NCO-Funktionalität von 2,5 bis 3,8. In einer bevorzugten Ausführungsform ist das mindestens eine aliphatische Polyisocyanat in der Isocyanatkomponente des Klebstoffs zu 20 bis 70 Gew.%, insbesondere bevorzugt zu 30 bis 60 Gew.% enthalten.

Die erfindungsgemäß bevorzugt zu verwendenden Glasfasern sind sogenannte "Kurzfasern" die auch als "Glasfaser-Füllstoffe" oder "milled fiber" bekannt sind. Sie zeichnen sich vorzugsweise durch eine Faserstärke, also einen Faserdurchmesser, zwischen 5 und 30 µm und eine Faserlänge zwischen 50 und 350 µm aus. Besonders bevorzugt sind solche Glasfasern, die mit einer Schlichte auf der Basis von Aminosilanen beschichtet worden sind. Beispiele für derartige Aminosilane sind N-(2-Aminoethyl)(3-aminopropyl)trimethoxysilan, (3-Aminopropyl)triethoxysilan, N-(2-Aminoethyl)(3-aminopropyl)methyldimethoxysilan, (3-Aminopropyl)trimethoxysilan, (N-Cyclohexylaminomethyl)methyldiethoxysilan, (N-Cyclohexylaminomethyl)triethoxysilan, (N-Phenylaminomethyl)methyldimethoxysilan, (N-Phenylaminomethyl)trimethoxysilan. Der Schlichtegehalt der getrockneten Glasfasern beträgt dabei vorzugsweise 0,2 bis 2,0 Gew.% bezogen auf das Gesamtgewicht der beschichteten Faser. Der Anteil an Glasfasern in der Polyolkomponente beträgt 1 bis 65 Gew.%, vorzugsweise 10 bis 50 Gew.%, stärker bevorzugt 20 bis 40 Gew.% bezogen auf das Gesamtgewicht der Polyolkomponente.

Die Polyolkomponente enthält weiterhin mindestens einen Katalysator. Als Katalysatoren werden vorzugsweise Metallkatalysatoren eingesetzt. Unter Metallkatalysatoren werden in der vorliegenden Erfindung solche Katalysatoren verstanden, die mindestens ein Metallatom als katalytisches Zentrum enthalten. Es handelt sich dabei vorzugsweise um die üblichen, in der Polyurethan-Chemie bekannten Metallkatalysatoren, wie z.B. Eisen- oder insbesondere auch Zinnverbindungen. Beispiele hierfür sind 1,3-Dicarbonyl-Verbindungen des Eisens, wie Eisen(III)-Acetylacetonat, sowie vorzugsweise Verbindungen des 2- bzw. 4-wertigen Zinns, insbesondere die Sn(II)-Carboxylate bzw. die Dialkyl-Sn(IV)-Dicarboxylate, wie z.B. Zinn(II)-Octoat, Dibutylzinndilaurat, Dibutylzinndiacetat, Dioctylzinndiacetat, Dibutylzinnmaleat. Die Metallkatalysatoren enthalten dabei vorzugsweise keine Metall-Kohlenstoff-Bindung. Als Metallkatalysatoren sind insbesondere Zinnverbindungen bevorzugt, insbesondere solche, die keine Zinn-Kohlenstoff-Bindung aufweisen. Ganz besonders bevorzugt sind cyclische Zinnverbindungen der Formeln I bis IV

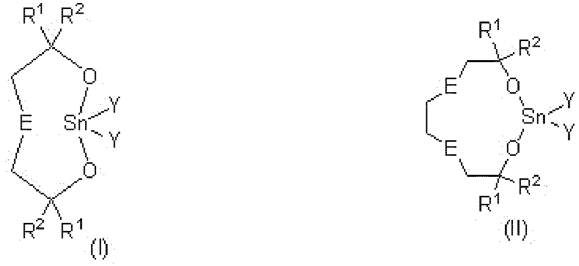

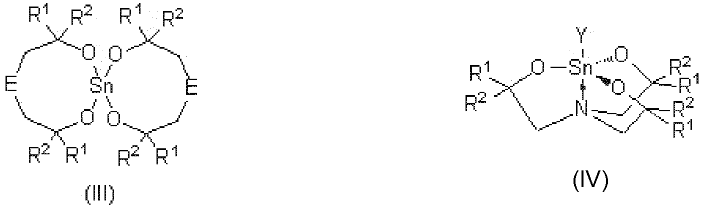

In den Formeln I bis IV bedeuten
E = -N(R³)-, -O-, -S-, oder -C(R³)₂- ;
R¹, R² = H, Alkyl oder Aryl;
R³ = H, Alkyl, Aryl oder -(CH₂)ₙX mit n = 1 bis 12 und
X = -N(R¹)₂, -OR¹, -SR¹, -P(R¹)₂ oder -P(=O)(R⁴)₂;
R⁴ = Alkyl, Aryl, -O(C₂H₅) oder -O-iso(C₃H₇); und
Y = Halogen, vorzugsweise Cl, Br, I, -OR¹; -OC(=O)R¹; -SR¹ oder -OP(=O)(R⁴)₂;
wobei die Arylreste vorzugsweise 6 bis 12 Kohlenstoffatome enthalten und die Alkylreste vorzugsweise 1 bis 12 Kohlenstoffatome enthalten.

Es können auch Mischungen der vorgenannten Katalysatoren eingesetzt werden. Diese werden vorzugsweise in einer Menge von 0,005 bis 1 Gew.%, insbesondere bevorzugt von 0,01 bis 0,5 Gew.% bezogen auf das Gesamtgewicht der Polyolkomponente eingesetzt.

Der erfindungsgemäße 2K-PU-Klebstoff kann zusätzlich ein oder mehrere Additive oder Hilfsstoffe enthalten. Darunter werden Stoffe verstanden, die zugesetzt werden, um die Eigenschaften des Klebstoffs, wie z.B. die Viskosität, das Benetzungsverhalten, die Stabilität, die Blasenbildung, die Lagerfähigkeit oder die Haftung, in gewünschter Weise zu modifizieren oder auch die Gebrauchseigenschaften dem Anwendungszweck anzupassen. Beispiele für Additive oder Hilfsstoffe sind Füllstoffe, Verlaufsmittel, Entlüfter, Thixotropiermittel, Alterungsschutzmittel, Trockenmittel, Harze, Weichmacher, Stabilisatoren, Netzmittel, Farbstoffe, Farbpasten oder Pigmente. Die Additive oder Hilfsstoffe werden vorzugsweise ganz oder teilweise der Polyolkomponente zugemischt, und zwar in einem Massenanteil von 0 bis 65 Gew.%, vorzugsweise von 1 bis 50 Gew.%, stärker bevorzugt von 2 bis 40 Gew.%, insbesondere bevorzugt von 4 bis 30 Gew.% bezogen auf das Gesamtgewicht der Polyolkomponente. Die Isocyanatkomponente kann aber ebenfalls Additive oder Hilfsstoffe enthalten, wie z. B. Thixotropiermittel und / oder Trockenmittel, sofern diese die Lagerstabilität der Isocyanatkomponente nicht verringern.

Als geeignete Stabilisatoren sind im Sinne dieser Erfindung Antioxidantien, UV-Stabilisatoren oder Hydrolyse-Stabilisatoren zu verstehen. Beispiele hierfür sind die handelsüblichen sterisch gehinderten Phenole und/oder Thioether und/oder substituierten Benzotriazole und/oder Amine vom "HALS"-Typ (Hindered Amine Light Stabilizer).

Bei den Harzen kann es sich um natürliche Harze oder um synthetische Harze handeln. Beispiele dafür sind Schellack, Kolophonium, Tallharze, Balsamharze oder Wurzelharze, Kohlenwasserstoff-, Terpen-, Cumaron/Inden-, Furan-, Alkyd-, Glycerinester-, Harnstoff-, Melamin-, Polyamid- Harze, insbesondere auch Aldehyd-, Keton- oder Phenolharze. Die Harze haben im Allgemeinen einen niedrigen Schmelzpunkt und sind unter anderem für eine verbesserte Verträglichkeit der Komponenten vorteilhaft. Eine besondere Ausführungsform setzt Hydroxylgruppen-haltige Harze ein, insbesondere solche mit mehreren Hydroxylgruppen. Diese können dann auch mit den Isocyanaten reagieren. In einer bevorzugten Ausführungsform kann die Menge zwischen 5 bis 30 Gew.% bezogen auf das Gesamtgewicht der Polyolkomponente betragen.

Als Füllstoffe sind insbesondere gegenüber Isocyanaten nicht reaktive anorganische Verbindungen geeignet. Beispiele für geeignete Füllstoffe und Pigmente sind natürliche, gemahlene Kreide gefällte Kreide, Schwerspat, Talk, Glimmer, Ruß, Titandioxid, Eisenoxide, Aluminiumoxid, Zinkoxid, Zinksulfat und/oder Siliziumdioxid. Es können auch wasserabsorbierende Pulver, beispielsweise Zeolith, als Füllstoff enthalten sein. Die Füllstoffe haben eine Partikelgröße von 1 bis 200 µm, insbesondere von 1 bis 50 µm, es kann sich aber auch um nanoskalige Pigmente handeln. Die Menge der Füllstoffe und Pigmente beträgt vorzugsweise bis 60 Gew.%, besonders bevorzugt von 5 bis 40 Gew.% bezogen auf das Gesamtgewicht der Polyolkomponente. Die Menge der Füllstoffe beeinflusst die Härte des vernetzten Klebstoffs. Ebenso kann über Menge und Auswahl des Füllstoffs die Viskosität beeinflusst werden.

Die Additive oder Hilfsstoffe werden vorzugsweise so ausgewählt, dass sie nicht mit den Isocyanaten reagieren, insbesondere nicht in der Zeitdauer der Vernetzungsreaktion. Insbesondere sollen im Wesentlichen keine Additive oder Hilfsstoffe zugegeben werden, die eine Blasenbildung im 2K-PU-Klebstoff fördern, wie beispielsweise Carbonsäuren. Der erfindungsgemäße 2K-PU-Klebstoff soll weiterhin bevorzugt im Wesentlichen keine organischen, beispielsweise bei Temperaturen bis zu 120°C flüchtigen, Lösemittel enthalten. Auch Weichmacher sollen im Wesentlichen nicht vorhanden sein.

Unter "im Wesentlichen nicht vorhanden" oder "im Wesentlichen nicht enthalten" oder "im Wesentlichen nicht zugegeben" wird im Rahmen der vorliegenden Erfindung verstanden, dass der Anteil der betreffenden Komponenten weniger als 2 Gew.%, vorzugsweise weniger als 1 Gew.%, stärker bevorzugt weniger als 0,5 Gew.%, besonders bevorzugt 0 Gew.% bezogen auf die Gesamtmenge des 2K-PU-Klebstoffs beträgt.

Das NCO/OH-Verhältnis, also das molare Verhältnis der in der Isocyanatkomponente enthaltenen Isocyanatgruppen zu den in der Polyolkomponente enthaltenen OH-Gruppen, liegt in der Regel im Bereich der Äquivalenz, wobei im Hinblick auf möglicherweise an der Oberfläche vorhandene Feuchtigkeit ein geringer Überschuß an Isocyanat-Gruppen zweckmäßig sein kann. Das NCO/OH-Verhältnis liegt vorzugsweise zwischen 0,90:1 und 1,5:1, insbesondere zwischen 1,0:1 und 1,3:1.

Zur Herstellung des erfindungsgemäßen 2K-PU-Klebstoffes wird zunächst die Polyolkomponente hergestellt. Dazu können die Polyole ggf. unter Erwärmen gemischt werden. Anschließend ist es vorteilhaft gegebenenfalls feste Anteile in der Mischung, soweit dies möglich ist, zu lösen. Danach werden die Additive oder Hilfsstoffe zugemischt und dispergiert. Dabei soll der Feuchtigkeitsgehalt niedrig gehalten werden. Beispielsweise kann Wasser durch die Verwendung von Molekularsieben vermindert werden. Inerte Additive oder Hilfsstoffe können auch teilweise der Isocyanatkomponente zugemischt werden. Die Polyolkomponente und die Isocyanatkomponente werden bis zu ihrer Anwendung getrennt gelagert. Zur Anwendung werden diese beiden Komponenten in an sich bekannter Weise miteinander gemischt und das Gemisch auf mindestens eines der zu verklebenden Substrate aufgetragen.

Der erfindungsgemäße 2K-PU-Klebstoff soll bei Verarbeitungstemperatur, d. h. zwischen 10 bis 40°C, vorzugsweise flüssig bis pastös, insbesondere bevorzugt pastös sein. Er soll bevorzugt als Film oder als Raupe aufgetragen werden können und dabei nicht vom Substrat herunterfließen. In einer besonders bevorzugten Ausführungsform ist der erfindungsgemäße 2K-PU-Klebstoff thixotrop.

Da häufig große Flächen verklebt werden müssen und um eine genaue Ausrichtung der zu verklebenden Substratteile zu ermöglichen, ist eine lange offene Zeit erforderlich. In einer bevorzugten Ausführungsform wird eine offene Zeit von mehr als 50 min erzielt. Unter offener Zeit wird der Zeitraum verstanden, der nach der vollständigen Vermischung des 2K-Klebstoffs zur sachgerechten Verarbeitung verbleibt, bevor die Konsistenz des 2K-PU-Klebstoffs durch einsetzende Reaktion sich so verändert hat, dass eine Applikation, das Anfließen auf dem Substrat und eine gute Adhäsion nicht mehr erzielt werden kann. Dabei kann die Veränderung der Klebstoffzusammensetzung durch beabsichtigte Vernetzungsreaktionen geschehen, es können jedoch auch Nebenreaktionen die offene Zeite negativ beeinflussen. Unter Laborbedingungen kann zur Abschätzung der offenen Zeit die sogenannte Topfzeit bestimmt werden. Dabei ist die Topfzeit der Zeitraum zwischen vollständiger Vermischung der Komponenten und dem Beginn des Fadenzugs der Klebstoffmischung.

Überraschenderweise hat sich bei den erfindungsgemäßen katalysatorhaltigen 2K-PU-Klebstoffen gezeigt, dass die Katalysatorwirkung durch die Glasfasern verstärkt wird. Dies ist besonders für 2K-PU-Klebstoffe mit aliphatischen Isocyanaten von Bedeutung, da aliphatische Isocyanate im Vergleich zu aromatischen Isocyanaten häufig eine geringere Reaktivität zeigen und die 2K-PU-Klebstoffe daher häufig sehr lange Aushärtezeiten aufweisen. Sind zudem lange Topfzeiten beziehungsweise offene Zeiten gefordert, dann werden vorzugsweise bei Raumtemperatur nicht oder wenig reaktive Katalysatoren oder Katalysatorsysteme, die bei Temperaturerhöhung aktiviert werden, eingesetzt, wie beispielweise Kombinationen von Zinnverbindungen und Komplexbildnern. Komplexbildner bzw. Chelatbildner im Sinne dieser Erfindung sind Verbindungen, die zur Bildung von Komplexen befähigt sind, vorzugsweise zur Komplexierung oder Maskierung des Zinns.

Beispiele für derartige Komplexbildner sind Tropolon, Maltol, Ethylmaltol, 3-Hydroxyflavon, Salicylhydroxamsäure, N,N'-Bis(salicyliden)ethylendiamin, Kojisäure, 8-Hydroxychinolin, Acetylaceton, Acetessigester, Gallussäureethylester, Dehydracetsäure, 2,5-Dihydroxy-1,4-Benzochinon, Dithizon oder Tannin. Chelatbildner und zinnbasierte Katalysatoren werden vorzugsweise in einer Gesamtmenge von 0,01 bis etwa 5 Gew.% bezogen auf das Gesamtgewicht der Polyolkomponente verwendet.

### Messverfahren

Die im vorliegenden Text angegebenen Molekulargewichtsangaben beziehen sich, soweit nicht anders angegeben, auf das zahlenmittlere Molekulargewicht (Mn). Die Molekulargewichtsangaben beziehen sich dabei, soweit nicht anders angegeben, auf Werte, wie sie durch Gelpermeationschromatographie (GPC) gemäß der Norm DIN 55672-1 (2007) mit THF als Eluent gegen einen Polystyrolstandard erhältlich sind.

Die im vorliegenden Text angegebenen Glasübergangstemperaturen werden, soweit nicht anders angegeben, mittels dynamischer Differenz-Thermoanalyse (Differential Scanning Calorimetry - DSC) gemäß EN ISO 11357-2 (2014) bestimmt.

Die im vorliegenden Text angegebenen Zugscherfestigkeiten werden, soweit nicht anders angegeben, gemäß der Norm DIN EN 1465 (2009) bestimmt.

Die im vorliegenden Text angegebenen E-Module (Elastizitätsmodule), Bruchdehnungen und Zugfestigkeiten werden, soweit nicht anders angegeben, gemäß der Norm DIN EN ISO 527-2 (2012) bestimmt.

Unter der NCO-Funktionalität einer Verbindung wird im vorliegenden Text die mittlere Anzahl von NCO-Gruppen pro Molekül verstanden. Die NCO-Funktionalität wird aus dem zahlenmittleren Molekulargewicht und dem NCO-Gehalt der Verbindung berechnet. Der NCO-Gehalt wird, soweit nicht anders angegeben, gemäß der Norm DIN EN ISO 11909 (2007) bestimmt. Der Quotient aus dem zahlenmittleren Molekulargewicht und der NCO-Funktionalität ergibt das NCO-Äquivalentgewicht der Verbindung.

Unter der OH-Funktionalität einer Verbindung ist die mittlere OH-Funktionalität zu verstehen. Sie gibt die mittlere Anzahl an Hydroxylgruppen pro Molekül an. Die mittlere OH-Funktionalität einer Verbindung wird auf Basis des zahlenmittleren Molekulargewichts und der Hydroxylzahl berechnet werden. Die Hydroxylzahl einer Verbindung wird, wenn nicht anders angegeben, nach der Norm DIN 53240-1 (2012) bestimmt. Der Quotient aus dem zahlenmittleren Molekulargewicht und der OH-Funktionalität ergibt das OH-Äquivalentgewicht der Verbindung.

Die offene Zeit wird gemäß der vorliegenden Erfindung nach der folgenden Methode bewertet: Eine 4 cm hohe und 10 cm breite Klebstoffraupe wird auf eine Platte aus glasfaserverstärktem Kunststoff (GFK-Platte) von 3 mm Dicke aufgetragen und nach festgelegten Zeiten bei 35°C und 70 % relativer Luftfeuchtigkeit nach Auflegen einer zweiten GFK-Platte manuell verpresst. Dabei ist mit Abstandshaltern die Dicke der Klebstoffschicht auf 3 mm einzustellen. Die Raupe soll nach Auftrag der Klebstoffmischung innerhalb der offenen Zeit noch homogen verpressbar sein, d.h. der Klebstoff stellt sich bei der Verpressung visuell also als homogene Masse dar und weist keine bereits ausgehärten Teilbereiche, sichtbar als feste Partikel, auf. Anschließend erfolgt die Härtung des Klebstoffs in 24 h bei 80°C. Nach Aussägen von Prüfkörpern aus den verklebten Platten wird die Zugscherfestigkeit bestimmt. Die ermittelten Zugscherfestigkeiten werden mit Werten verglichen, die von Prüfkörpern stammen, bei denen die Verpressung unmittelbar nach dem Klebstoffauftrag erfolgt.

Zur Bestimmung der Topfzeit wird folgendes Verfahren eingesetzt: In einen Kunstoffbehälter oder Pappbecher werden die auf 20 ± 1 °C vortemperierten Komponenten des 2K-PU-Klebstoffes (Gesamteinwaage 100 g) gefüllt und unter ständigem Rühren mittels Holzspatel vermischt. Der Beginn des Vermischens stellt den Zeitpunkt Null der Messung dar. Während des Rührens wird der Holzspatel in regelmäßigen Zeitabständen (5 min) herausgezogen und das Abfließverhalten des Klebstoffs vom Holzspatel beobachtet. Die Zeitspanne vom Beginn der Messung bis zu dem Zeitpunkt, zu dem sich nicht-ablaufende Fäden aus dem Gemisch ziehen lassen und der Übergang von zähfließender Flüssigkeit zu einer standfesten Paste erreicht wird, wird als Topfzeit bezeichnet.

Das Fließverhalten und die Standfestigkeit von pastösen Zweikomponenten-Polyurethansystemen werden mit Hilfe eines Ablauftests auf Stahlblechen geprüft. Dazu wird das Stahlblech mit 2-Propanol entfettet. Die beiden Komponenten werden auf 20 ± 1 °C temperiert und im vorgeschriebenen Mischungsverhältnis eingewogen (Gesamteinwaage 100 g). Mit Hilfe einer Schablone wird eine definierte Geometrie (45 x 23 x 9 mm großer Klebstoffblock) blasenfrei auf das Stahlblech aufgebracht. Mit einem Spatel wird die Oberfläche glattgestrichen. Anschließend wird die Schablone senkrecht angehoben. Die obere und untere Kantenlage des Klebstoffblocks wird auf dem Blech markiert und das Stahlblech sofort in senkrechter Stellung aufgehängt oder aufgestellt. Die Laufstrecke des Klebstoffes wird nach einer definierten Messzeit (15 Minuten) gemessen. Die Zusammensetzung wird im Sinne der vorliegenden Anmeldung als pastös bezeichnet, wenn der Klebstoffblock innerhalb der definierten Messzeit an der markierten Grundlinie nicht wandert, also keine Verschiebung direkt auf dem Stahlblech zu erkennen ist. Eine Neigung oder Krümmung des Klebstoffblocks in Bereichen, die nicht in direktem Kontakt mit dem Stahlblech sind, ist dabei zulässig.
Die folgenden Beispiele erläutern die Erfindung. Sofern nicht anders angegeben beziehen sich die Mengenangaben eines Bestandteils auf Gewichtsprozent (Massenprozent) bezogen auf des Gesamtgewicht derjenigen Komponente, die diesen Bestandteil enthält.

Nach einer Aushärtung über 24 h bei 80 °C, sofern nicht anders angegeben, wurden die Zugscherfestigkeit, die Zugfestigkeit, das E-Modul und die Glasübergangstemperatur bei bestimmt.

### Beispiele

### Beispiel 1 (nicht erfindungsgemäß):

Polyolkomponente (OH-Komponente):

| | |
|---|---|
| Zuckerbasiertes Polyol ¹⁾ | 22,5 |
| Sovermol 805 ²⁾ | 5,0 |
| Sovermol 819 ³⁾ | 10,0 |
| Propoxyliertes Bisphenol A ⁴⁾ | 10,5 |
| Molsieb | 8,0 |
| Calciumcarbonat, gecoatet | 44,0 |

Isocyanatkomponente (NCO-Komponente):

| | |
|---|---|
| Lupranat MIS ⁵⁾ | 58,5 |
| Desmodur N 3300 ⁶⁾ | 30,0 |
| Molsieb | 5,5 |
| Pyrogene Kieselsäure | 6,0 |

1) OH-Funktionalität zwischen 4 und 5
2) Fettsäureester, Fa. BASF, OH-Äquivalentgewicht 330 g/eq, OH-Funktionalität 3,5
3) Fettsäureester, Fa. BASF, OH-Äquivalentgewicht 234 g/eq, OH-Funktionalität 2,6
4) OH-Äquivalentgewicht 174 g/eq, Propoxylierungsgrad: ca. 2
5) MDI-Mischung aus 50 Gew.% 4,4'-MDI und 50 Gew.% 2,4'-MDI, Fa. BASF, NCO-Gehalt 33,5 Gew.%
6) Trimerisiertes Hexamethylendiisocyanat, Fa. Bayer MaterialScience, NCO-Gehalt 21,8 %, NCO-Äquivalentgewicht 193 g/eq

Mischungsverhältnis: 100 Gewichtsteile der Polyolkomponente auf 60 Gewichtsteile der Isocyanatkomponente.

| | |
|---|---|
| Topfzeit (bei Raumtemperatur) | 165 min |
| Glasübergangstemperatur | 75° C |
| Zugfestigkeit (24 h, 80 °C) | 46,1 MPa |
| Zugfestigkeit (7 h, 70 °C) | 27,9 MPa |
| E-Modul | 3880 MPa |

| t/min | 0 | 40 | 50 | 60 | 70 |
|---|---|---|---|---|---|
| Verpressbarkeit (offene Zeit) ⁰⁾ | + | + | + | + | (+) |
| Zugscherfestigkeit / MPa | 16,0 | 16,0 | 14,7 | 12,9 | 9,6 |

| | | | | | |
|---|---|---|---|---|---|
| 0) + ∼gut, (+) ∼noch gut, - ∼ungenügend | | | | | |

### Beispiel 2 (nicht erfindungsgemäß):

Polyolkomponente (OH-Komponente):

| | |
|---|---|
| Zuckerbasiertes Polyol ¹⁾ | 22,5 |
| Sovermol 805 ²⁾ | 5,0 |
| Sovermol 819 ³⁾ | 10,0 |
| Propoxyliertes Bisphenol A ⁴⁾ | 10,5 |
| Molsieb | 8,0 |
| Calciumcarbonat, gecoatet | 8,0 |
| Glasfasern ⁷⁾ | 36,0 |

Isocyanatkomponente (NCO-Komponente):

| | |
|---|---|
| Lupranat MIS ⁵⁾ | 58,5 |
| Desmodur N 3300 ⁶⁾ | 30,0 |
| Molsieb | 5,5 |
| Pyrogene Kieselsäure | 6,0 |

7) Kurzfasern mit Aminosilanschlichte, Faserstärke zwischen 5 und 30 µm, Faserlänge zwischen 50 und 350 µm, Schlichtegehalt der getrockneten Glasfaser 0,2 bis 2,0 Gew.%

Mischungsverhältnis: 100 Gewichtsteile der Polyolkomponente auf 60 Gewichtsteile der Isocyanatkomponente.

| | |
|---|---|
| Topfzeit (bei Raumtemperatur) | 165 min |
| Glasübergangstemperatur | 75 °C |
| Zugfestigkeit (24 h, 80 °C) | 56,0 MPa |
| Zugfestigkeit (7 h, 70 °C) | 36,4 MPa |
| E-Modul | 4800 MPa |

| t/min | 0 | 40 | 50 | 60 | 70 |
|---|---|---|---|---|---|
| Verpressbarkeit (offene Zeit) ⁰⁾ | + | + | + | + | (+) |
| Zugscherfestigkeit / MPa | 17,3 | 17,0 | 14,9 | 13,5 | 10,5 |

### Beispiel 3 (erfindungsgemäß):

Polyolkomponente (OH-Komponente):

| | |
|---|---|
| Zuckerbasiertes Polyol ¹⁾ | 22,500 |
| Sovermol 805 ²⁾ | 5,000 |
| Sovermol 819 ³⁾ | 10,000 |
| Propoxyliertes Bisphenol A ⁴⁾ | 10,500 |
| Molsieb | 8,000 |
| Calciumcarbonat, gecoatet | 7,665 |
| Glasfasern ⁷⁾ | 36,000 |
| Dibutylzinndilaurat | 0,035 |
| 8-Hydroxychinolin | 0,300 |

Isocyanatkomponente (NCO-Komponente):

| | |
|---|---|
| Lupranat MIS ⁵⁾ | 58,5 |
| Desmodur N 3300 ⁶⁾ | 30,0 |
| Molsieb | 5,5 |
| Pyrogene Kieselsäure | 6,0 |

Mischungsverhältnis: 100 Gewichtsteile der Polyolkomponente auf 60 Gewichtsteile der Isocyanatkomponente.

| | |
|---|---|
| Topfzeit (bei Raumtemperatur) | 65 min |
| Glasübergangstemperatur | 75° C |
| Zugfestigkeit (24 h, 80 °C) | 56,3 MPa |
| Zugfestigkeit (7 h, 70 °C) | 51,1 MPa |
| E-Modul | 4880 MPa |

| t/min | 0 | 40 | 50 | 60 | 70 |
|---|---|---|---|---|---|
| Verpressbarkeit (offene Zeit) ⁰⁾ | + | + | + | (+) | - |
| Zugscherfestigkeit / MPa | 17,0 | 17,3 | 14,0 | 10,1 | 1,0 |

Das erfindungsgemäße Beispiel 3 hat eine ausreichend lange offene Zeit, weist aber eine erwünschte kürzere Aushärtezeit als die Vergleichsbeispiele auf.

### Beispiel 4:

Die Zusammensetzung der OH-Komponente entspricht den Beispielen 2 bzw. 3, jedoch wurden die Mengen von gecoatetem Calciumcarbonat und Glasfasern entsprechend der folgenden Tabellen variiert. Die Isocyanatkomponente ist unverändert.

Zusammensetzungen gemäß Beispiel 2 (ohne Katalysator) mit variierenden Mengen von gecoatetem Calciumcarbonat und Glasfasern:

| | | | | | |
|---|---|---|---|---|---|
| Gecoatetes Calciumcarbonat | 44,0 | 34,0 | 24,0 | 14,0 | 8,0 |
| Glasfasern ⁷⁾ | 0,0 | 10,0 | 20,0 | 30,0 | 36,0 |
| Zugfestigkeit / MPa (7 h, 70 °C) | 27,9 | 28,8 | 31,0 | 35,0 | 36,4 |
| Zugfestigkeit / MPa (24 h, 80 °C) | 46,1 | 47,0 | 48,6 | 54,1 | 56,0 |

Zusammensetzungen gemäß Beispiel 3 (mit Katalysator) mit variierenden Mengen von gecoatetem Calciumcarbonat und Glasfasern:

| | | | | | |
|---|---|---|---|---|---|
| Gecoatetes Calciumcarbonat | 43,665 | 33,665 | 23,665 | 13,665 | 7,665 |
| Glasfasern ⁷⁾ | 0 | 10,0 | 20,0 | 30,0 | 36,0 |
| Zugfestigkeit / MPa (7 h, 70 °C) | 34,0 | 34,8 | 36,5 | 47,5 | 51,1 |
| Zugfestigkeit /MPa (24 h, 80 °C) | 46,1 | 46,8 | 48,9 | 53,9 | 56,3 |

Die Ergebnisse zeigen, dass im katalysatorfreien System die Differenz der Zugfestigkeiten zwischen der Aushärtung in 7 h bei 70°C und 24 h bei 80°C größer ist als im katalysatorhaltigen System, und dass die Differenz der Zugfestigkeiten im katalysatorhaltigen System mit steigender Glasfaserkonzentration verringert wird.

Im katalysatorhaltigen System liegt die Zugfestigkeit nach Aushärtung in 7 h bei 70 °C umso näher an der Zugfestigkeit nach einer Aushärtung in 24 h bei 80 °C, je höher der Gehalt an Glasfasern ist. In den katalysatorhaltigen Klebstoffen verstärken die Glasfasern also die Katalysatorwirkung.

## Patentansprüche

1. Zwei-Komponenten-Polyurethan-Klebstoff umfassend
I) eine Polyolkomponente enthaltend mindestens einen Katalysator und
(a) 2 bis 30 Gew.% mindestens eines oleochemischen Polyols mit einem zahlenmittleren Molekulargewicht (Mₙ) von mindestens 500 g/mol;
(b) 5 bis 35 Gew.% mindestens eines von (a) verschiedenen Polyols mit 3 bis 14 Hydroxylgruppen,
(c) 5 bis 35 Gew.% mindestens eines von (a) und (b) verschiedenen Polyols ausgewählt aus ethoxylierten und/oder propoxylierten Polyphenolen;
(d) 1 bis 65 Gew.% Glasfasern oder eines Gemisches von unterschiedlichen Glasfasern;
(e) 0 bis 65 Gew.% mindestens eines von (a) bis (d) verschiedenen Additivs oder Hilfsstoffs;
wobei sich die Massenanteile der Komponenten (a) bis (e) auf das Gesamtgewicht der Polyolkomponente beziehen; sowie
II) eine Isocyanatkomponente enthaltend aromatische und/oder aliphatische Polyisocyanate in einem NCO/OH-Verhältnis von 0,9:1 bis 1,5:1; wobei der vernetzte Zwei-Komponenten-Polyurethan-Klebstoff eine Glasübergangstemperatur (Tg) von mindestens 65 °C aufweist, bestimmt mittels DSC gemäß EN ISO 11357-2 (2014).

2. Zwei-Komponenten-Polyurethan-Klebstoff nach Anspruch 1, **dadurch gekennzeichnet, dass** die Glasfasern eine Faserstärke zwischen 5 und 30 pm und eine Faserlänge zwischen 50 und 350 pm haben.

3. Zwei-Komponenten-Polyurethan-Klebstoff nach Anspruch 1 oder 2, **dadurch gekennzeichnet, dass** die Glasfasern mit einer Schlichte auf Basis von Aminosilanen beschichtet sind, und der Schlichtegehalt der getrockneten Glasfaser 0,2 bis 2,0 Gew.% bezogen auf das Gesamtgewicht der beschichteten Glasfaser beträgt.

4. Zwei-Komponenten-Polyurethan-Klebstoff nach Anspruch 1, 2 oder 3, **dadurch gekennzeichnet, dass** der mindestens eine Katalysator eine Zinnverbindung ist.

5. Zwei-Komponenten-Polyurethan-Klebstoff nach Anspruch 4, **dadurch gekennzeichnet, dass** die Zinnverbindung keine Zinn-Kohlenstoff-Bindung aufweist.

6. Zwei-Komponenten-Polyurethan-Klebstoff nach Anspruch 5, **dadurch gekennzeichnet, dass** als Zinnverbindung cyclische Zinnverbindungen der Formeln I bis IV eingesetzt werden: 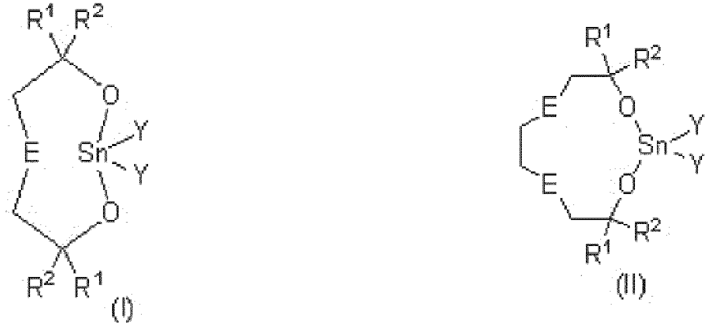 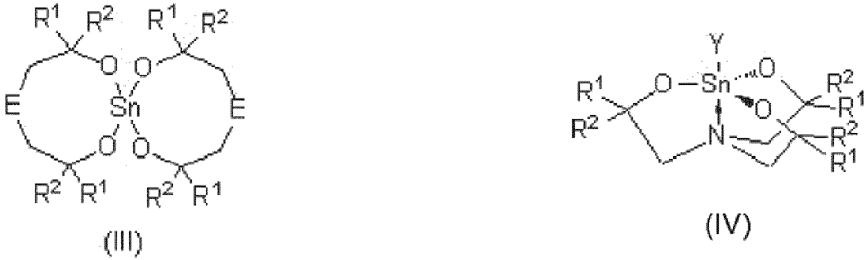 mit
E = -N(R³)-, -0-, -S-, oder -C(R³)2-;
R¹, R² = H, Alkyl oder Aryl;
R³ = H, Alkyl, Aryl oder -(CH₂)ₙX mit n = 1 bis 12 und
X = -N(R¹)2, -OR¹, -SR', -P(R¹)₂ oder -P(=O)(R⁴)₂;
R⁴ = Alkyl, Aryl, -O(C₂H₅) oder -O-iso(C₃H₇); und
Y = Halogen, vorzugsweise CI, Br, I, -OR¹; -OC(=O)R¹; -SR' oder-OP(=O)(R⁴)2;
wobei die Arylreste vorzugsweise 6 bis 12 Kohlenstoffatome enthalten und die Alkylreste vorzugsweise 1 bis 12 Kohlenstoffatome enthalten.

7. Zwei-Komponenten-Polyurethan-Klebstoff nach Anspruch 4 bis 6 **dadurch gekennzeichnet, dass** zusätzlich ein Komplexbildner verwendet wird.

8. Zwei-Komponenten-Polyurethan-Klebstoff nach einem der vorhergehenden Ansprüche, **dadurch gekennzeichnet, dass** der vernetzte Klebstoff einen E-Modul von mindestens 4 000 MPa und eine Zugfestigkeit von mindestens 40 MPa aufweist, jeweils bestimmt gemäß DIN EN ISO 527-2 (2012).

9. Zwei-Komponenten-Polyurethan-Klebstoff nach einem der vorhergehenden Ansprüche, **dadurch gekennzeichnet, dass** das oder die oleochemische(n) Polyol(e) ein OH-Äquivalentgewicht von 150 bis 500 g/eq und eine OH-Funktionalität von 2,3 bis 4 aufweist.

10. Zwei-Komponenten-Polyurethan-Klebstoff nach einem der vorhergehenden Ansprüche, **dadurch gekennzeichnet, dass** Komponente (b) ausgewählt wird aus ethoxylierten und / oder propoxylierten Kohlenhydraten.

11. Zwei-Komponenten-Polyurethan-Klebstoff nach einem der vorhergehenden Ansprüche, **dadurch gekennzeichnet, dass** Komponente (c) ausgewählt wird aus der Gruppe bestehend aus propoxyliertem Bisphenol A, propoxyliertem Bisphenol B, propoxyliertem Bisphenol F oder Mischungen der vorgenannten, vorzugsweise mit einem Propoxylierungsgrad von 2 bis 3, insbesondere bevorzugt von 2.

12. Zwei-Komponenten-Polyurethan-Klebstoff nach einem der vorhergehenden Ansprüche, **dadurch gekennzeichnet, dass** das aromatische Polyisocyanat 2,4'-Di-phenylmethandiisocyanat, 4,4'-Diphenylmethandiisocyanat, eine Mischung aus 2,4'-Diphenylmethandiisocyanat und 4,4'-Diphenylmethandiisocyanat, ein polymeres Isocyanat auf der Basis von 2,4'- und /oder 4,4'-Diphenylmethandiisocyanat mit einer NCO-Funktionalität von 2,0 bis 3,2 oder eine Mischung zweier oder mehrerer der vorgenannten aromatischen Polyisocyanate ist.

13. Zwei-Komponenten-Polyurethan-Klebstoff nach einem der vorhergehenden Ansprüche, **dadurch gekennzeichnet, dass** das aliphatische Polyisocyanat ein trimerisiertes Hexamethylendiisocyanat ist, vorzugsweise mit einer NCO-Funktionalität von 2,5 bis 3,8.

14. Verwendung eines Zwei-Komponenten-Polyurethan-Klebstoffs nach Anspruch 1 bis 13 zum Verkleben von Metall-, Kunststoff- und Schaumstoffsubstraten, Faserverbundwerkstoffen und faserhaltigen Formkörpern, insbesondere zum Verkleben von Faserverbundwerkstoffen und faserhaltigen Formkörpern auf Basis von Glasfasern, Kohlefasern, Naturfasern oder synthetischen Fasern (aus synthetischen Polymeren), eingebettet in einer Kunststoffmatrix.

15. Verfahren zum Verkleben von zwei Substraten, vorzugsweise ausgewählt aus Metall-, Kunststoff- und Schaumstoffsubstraten, Faserverbundwerkstoffen und faserhaltigen Formkörpern, insbesondere bevorzugt ausgewählt aus Faserverbundwerkstoffen und faserhaltigen Formkörpern auf Basis von Glasfasern, Kohlefasern, Naturfasern oder synthetischen Fasern, eingebettet in einer Kunststoffmatrix, bei dem zunächst der Zwei-Komponenten-Polyurethan-Klebstoff nach Anspruch 1 bis 13 auf die zu verklebende Fläche des ersten Substrats aufgebracht und anschließend das zweite Substrat mit seiner zu verklebenden Fläche auf das erste Substrat aufgelegt wird.

## Claims

1. A two-component polyurethane adhesive comprising
I) a polyol component containing at least one catalyst and
(a) 2 to 30 wt.% at least one oleochemical polyol having a number-average molecular weight (Mₙ) of at least 500 g/mol;
(b) 5 to 35 wt.% at least one polyol that is different from (a) and has 3 to 14 hydroxyl groups,
(c) 5 to 35 wt.% at least one polyol that is different from (a) and (b) and is selected from ethoxylated and/or propoxylated polyphenols;
(d) 1 to 65 wt.% glass fibers or a mixture of different glass fibers;
(e) 0 to 65 wt.% at least one additive or auxiliary that is different from (a) to (d); the mass proportions of components (a) to (e) being based on the total weight of the polyol component; and
II) an isocyanate component containing aromatic and/or aliphatic polyisocyanates in an NCO/OH ratio of 0.9:1 to 1.5:1; the crosslinked two-component polyurethane adhesive having a glass transition temperature (Tg) of at least 65 °C, determined by means of DSC in accordance with EN ISO 11357-2 (2014).

2. The two-component polyurethane adhesive according to claim 1, **characterized in that** the glass fibers have a fiber strength of between 5 and 30 µm and a fiber length of between 50 and 350 µm.

3. The two-component polyurethane adhesive according to claim 1 or 2, **characterized in that** the glass fibers are coated with a sizing agent based on amino silanes and the sizing agent content of the dried glass fiber is from 0.2 to 2.0 wt.% based on the total weight of the coated glass fiber.

4. The two-component polyurethane adhesive according to claim 1, 2 or 3, **characterized in that** the at least one catalyst is a tin compound.

5. The two-component polyurethane adhesive according to claim 4, **characterized in that** the tin compound does not have a tin-carbon bond.

6. The two-component polyurethane adhesive according to claim 5, **characterized in that** cyclic tin compounds of formulas I to IV are used as the tin compound: 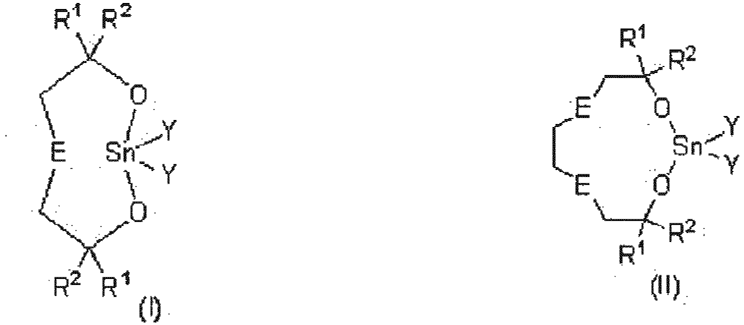 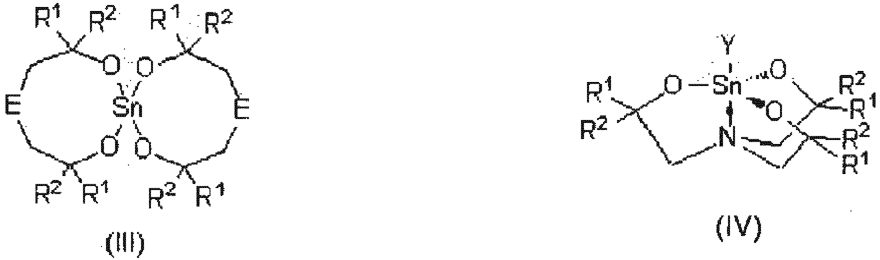 where
E = -N(R³)-, -0-, -S-, or -C(R³)2-;
R¹, R² = H, alkyl or aryl;
R³ = H, alkyl, aryl or -(CH₂)ₙX where n = 1 to 12 and
X = -N(R¹)₂, -OR¹, -SR', -P(R¹)₂ or -P(=O)(R⁴)₂;
R⁴ = alkyl, aryl, -O(C₂H₅) or -O-iso(C₃H₇); and
Y = halogen, preferably Cl, Br, I, -OR¹; -OC(=O)R¹; -SR' or - OP(=O)(R⁴)2;
the aryl functional groups preferably containing 6 to 12 carbon atoms and the alkyl functional groups preferably containing 1 to 12 carbon atoms.

7. The two-component polyurethane adhesive according to claims 4 to 6, **characterized in that** a complexing agent is additionally used.

8. The two-component polyurethane adhesive according to one of the preceding claims, **characterized in that** the crosslinked adhesive has an E module of at least 4000 MPa and a tensile strength of at least 40 MPa, determined in each case in accordance with DIN EN ISO 527-2 (2012).

9. The two-component polyurethane adhesive according to one of the preceding claims, **characterized in that** the oleochemical polyol(s) has/have an OH-equivalent weight of 150 to 500 g/eq and an OH functionality of 2.3 to 4.

10. The two-component polyurethane adhesive according to one of the preceding claims, **characterized in that** component (b) is selected from ethoxylated and/or propoxylated carbohydrates.

11. The two-component polyurethane adhesive according to one of the preceding claims, **characterized in that** component (c) is selected from the group consisting of propoxylated bisphenol A, propoxylated bisphenol B, propoxylated bisphenol F or mixtures thereof, preferably having a degree of propoxylation of 2 to 3, particularly preferably 2.

12. The two-component polyurethane adhesive according to one of the preceding claims, **characterized in that** the aromatic polyisocyanate is 2,4'-diphenylmethane diisocyanate, 4,4'-diphenylmethane diisocyanate, a mixture of 2,4'-diphenylmethane diisocyanate and 4,4'- diphenylmethane diisocyanate, a polymeric isocyanate based on 2,4'- and/or 4,4'-diphenylmethane diisocyanate having an NCO functionality of 2.0 to 3.2 or a mixture of two or more of the preceding aromatic polyisocyanates.

13. The two-component polyurethane adhesive according to one of the preceding claims, **characterized in that** the aliphatic polyisocyanate is a trimerized hexamethylene diisocyanate, preferably having an NCO functionality of 2.5 to 3.8.

14. The use of a two-component polyurethane adhesive according to claims 1 to 13 for adhesively bonding metal, plastics and foam substrates, fiber composite materials and fiber-containing shaped bodies, in particular for adhesively bonding fiber composite materials and fiber-containing shaped bodies based on glass fibers, carbon fibers, natural fibers or synthetic fibers (from synthetic polymers), embedded in a plastics matrix.

15. A method for adhesively bonding two substrates, preferably selected from metal, plastics and foam substrates, fiber composite materials and fiber-containing shaped bodies, particularly preferably selected from fiber composite materials and fiber-containing shaped bodies based on glass fibers, carbon fibers, natural fibers or synthetic fibers, embedded in a plastics matrix, in which the two-component polyurethane adhesive according to claims 1 to 13 is initially applied to the surface to be adhesively bonded of the first substrate and subsequently the surface to be bonded of the second substrate is placed onto the first substrate.

## Revendications

1. Adhésif au polyuréthane à deux composants comprenant
I) un composant polyol contenant au moins un catalyseur et
(a) 2 à 30 % en poids d'au moins un polyol oléochimique ayant un poids moléculaire moyen en nombre (Mₙ) d'au moins 500 g/mol ;
(b) 5 à 35 % en poids d'au moins un polyol autre que (a) comportant 3 à 14 groupes hydroxyle,
(c) 5 à 35 % en poids d'au moins un polyol autre que (a) et (b) choisi parmi les polyphénols éthoxylés et/ou propoxylés ;
(d) 1 à 65 % en poids de fibres de verre ou d'un mélange de différentes fibres de verre ;
(e) 0 à 65 % en poids d'au moins un additif ou adjuvant autre que (a) à (d) ; les pourcentages massiques des composants (a) à (e) se rapportnt au poids total du composant polyol ; et
II) un composant isocyanate contenant des polyisocyanates aromatiques et/ou aliphatiques dans un rapport NCO/OH de 0,9:1 à 1,5:1 ; l'adhésif au polyuréthane à deux composants réticulé ayant une température de transition vitreuse (Tg) d'au moins 65 °C, déterminée par DSC selon la norme EN ISO 11357-2 (2014).

2. Adhésif au polyuréthane à deux composants selon la revendication 1, **caractérisé en ce que** les fibres de verre ont une épaisseur de fibre comprise entre 5 et 30 pm et une longueur de fibre comprise entre 50 et 350 pm.

3. Adhésif au polyuréthane à deux composants selon la revendication 1 ou la revendication 2, **caractérisé en ce que** les fibres de verre sont revêtues d'un agent de collage à base d'aminosilanes, et la teneur en agent de collage de la fibre de verre séchée est de 0,2 à 2,0 % en poids, rapportée au poids total de la fibre de verre revêtue.

4. Adhésif au polyuréthane à deux composants selon la revendication 1, 2 ou 3, **caractérisé en ce que** l'au moins un catalyseur est un composé à base d'étain.

5. Adhésif au polyuréthane à deux composants selon la revendication 4, **caractérisé en ce que** le composé à base d'étain ne comporte pas de liaison étain-carbone.

6. Adhésif au polyuréthane à deux composants selon la revendication 5, **caractérisé en ce que** l'on utilise comme composé à base d'étain des composés à base d'étain cycliques des formules I à IV : 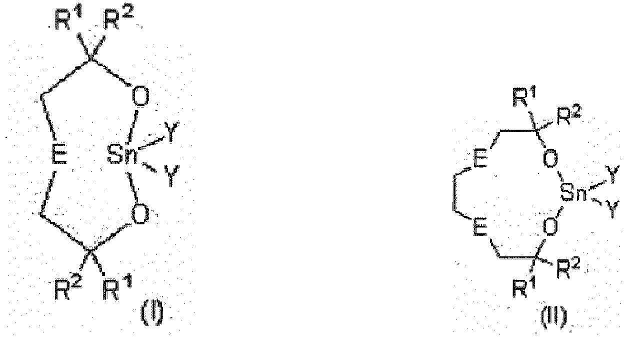 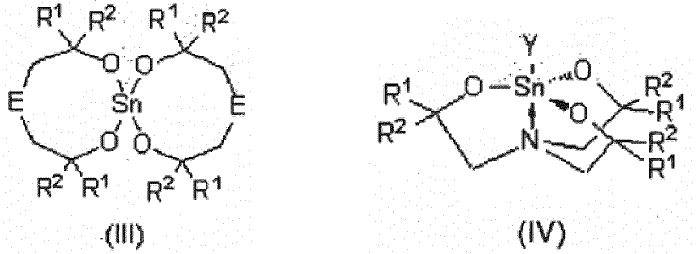 avec
E = -N(R³)-, -O-, -S- ou -C(R³)2- ;
R¹, R² = H, alkyle ou aryle ;
R³ = H, alkyle, aryle ou -(CH₂)ₙX avec n = 1 à 12 et
X = -N(R¹)₂, -OR¹, -SR', -P(R¹)₂ ou -P(=O)(R⁴)₂ ;
R⁴ = alkyle, aryle, -O(C₂H₅) ou -O-iso(C₃H₇) ; et
Y = halogène, de préférence Cl, Br, I, -OR¹ ; -OC(=O)R¹ ; -SR' ou -OP(=O)(R⁴)₂ ;
les radicaux aryle comportant de préférence 6 à 12 atomes de carbone et les radicaux alkyle comportant de préférence 1 à 12 atomes de carbone.

7. Adhésif au polyuréthane à deux composants selon les revendications 4 à 6, **caractérisé en ce que** l'on utilise en outre un agent complexant.

8. Adhésif au polyuréthane à deux composants selon l'une des revendications précédentes, **caractérisé en ce que** l'adhésif réticulé présente un module d'élasticité d'au moins 4000 MPa et une résistance à la traction d'au moins 40 MPa, déterminés chacun selon la norme DIN EN ISO 527-2 (2012).

9. Adhésif au polyuréthane à deux composants selon l'une des revendications précédentes, **caractérisé en ce que** l'au moins un polyol oléochimique a un poids équivalent OH de 150 à 500 g/eq et une fonctionnalité OH de 2,3 à 4.

10. Adhésif au polyuréthane à deux composants selon l'une des revendications précédentes, **caractérisé en ce que** le composant (b) est choisi parmi les glucides éthoxylés et/ou propoxylés.

11. Adhésif au polyuréthane à deux composants selon l'une des revendications précédentes, **caractérisé en ce que** le composant (c) est choisi dans le groupe comportant le bisphénol A propoxylé, le bisphénol B propoxylé, le bisphénol F propoxylé ou des mélanges de ceux-ci, de préférence avec un degré de propoxylation de 2 à 3, de préférence de 2.

12. Adhésif au polyuréthane à deux composants selon l'une des revendications précédentes, **caractérisé en ce que** le polyisocyanate aromatique est le diisocyanate de 2,4'-diphénylméthane, le diisocyanate de 4,4'-diphénylméthane, un mélange de diisocyanate de 2,4'-diphénylméthane et de diisocyanate de 4,4'-diphénylméthane, un isocyanate polymérique à base de diisocyanate de 2,4'- et/ou 4,4'-diphénylméthane ayant une fonctionnalité NCO de 2,0 à 3,2, ou un mélange d'au moins deux polyisocyanates aromatiques susmentionnés.

13. Adhésif au polyuréthane à deux composants selon l'une des revendications précédentes, **caractérisé en ce que** le polyisocyanate aliphatique est un diisocyanate d'hexaméthylène trimérisé, de préférence ayant une fonctionnalité NCO de 2,5 à 3,8.

14. Utilisation d'un adhésif au polyuréthane à deux composants selon la revendication 1 à 13 pour coller des substrats en métal, en matière plastique et en mousse, des matières composites renforcées par des fibres et des corps moulés contenant des fibres, en particulier pour coller des matières composites renforcées par des fibres et des corps moulés contenant des fibres à base de fibres de verre, de fibres de carbone, de fibres naturelles ou synthétiques (de polymères synthétiques) incorporées dans une matrice de matière plastique.

15. Procédé de collage de deux substrats, de préférence choisis parmi des substrats en métal, en matière plastique et en mousse, des matières composites renforcées par des fibres et des corps moulés contenant des fibres, de manière particulièrement préférée choisis parmi les matières composites renforcées par des fibres et les corps moulés contenant des fibres à base de fibres de verre, de fibres de carbone, de fibres naturelles ou de fibres synthétiques incorporées dans une matrice en matière plastique, procédé dans lequel l'adhésif au polyuréthane à deux composants selon les revendications 1 à 13 est appliqué à la surface à coller du premier substrat puis le deuxième substrat est placé, avec sa surface à coller, sur le premier substrat.
